# EUROPÄISCHE PATENTSCHRIFT

(11) **EP 3 559 650 B1**
(45) Veröffentlichungstag und Bekanntmachung des Hinweises auf die Patenterteilung: **16.11.2022**
(21) Anmeldenummer: 17803924.4
(22) Anmeldetag: 22.11.2017
(51) Int. Cl.: G01N 29/02, G01N 29/036, G01N 11/00, B81B 7/02, G01N 11/16, G01N 9/34, G01N 9/00, G01N 29/22, G01N 29/24

(54) **GASANALYSATOR UND GASANALYSEVORRICHTUNG**
GAS ANALYZER AND GAS ANALYZING DEVICE
ANALYSEUR DE GAZ ET DISPOSITIF ANALYSEUR DE GAZ

(30) Priorität: 20.12.2016 DE 102016124910
(43) Veröffentlichungstag der Anmeldung: 30.10.2019
(73) Patentinhaber: Endress+Hauser Flowtec AG, 4153 Reinach (CH); TrueDyne Sensors AG, 4153 Reinach (CH)
(72) Erfinder: HUBER, Christof, 3007 Bern (CH); REITH, Patrick, 4053 Basel (CH); BADARLIS, Anastasios, 4127 Birsfelden (CH)
(74) Vertreter: Hahn, Christian
(86) Internationale Anmeldenummer: PCT/EP2017/080052
(87) Internationale Veröffentlichungsnummer: WO 2018/114187

(56) Entgegenhaltungen:
- CN-B- 102 288 516
- DE-A1-102014 106 729

## Beschreibung

Die vorliegende Erfindung betrifft einen Gasanalysator, insbesondere einen Gasanalysator mit einem vibronischen Sensorelement, zum Ermitteln von Summenparametern eines Gasgemischs, wie Brennwert oder Wobbe-Index, beispielsweise eines Erdgases, welches gewöhnlich neben der Hauptkomponente Methan, weitere Kohlenwasserstoffe, Stickstoff, Kohlenstoffdioxyd, und Wasserdampf enthält. Zudem wird dem Erdgas häufig Wasserstoff beigemischt. Die Kenntnis der genauen Zusammensetzung beispielsweise für die Steuerung eines Brenners von großer Bedeutung. Verfahren zur Ermittlung der Eigenschaften eines Brenngases sind beispielsweise beschrieben in DE 10 2015 117 468 A1, DE 10 2016 121 226 A1, DE 10 2014 106 729 A1 und CN 102 288 516 B. Die darin beschriebene Bestimmung der Gaseigenschaften beruht insbesondere auf einer Messung der Dichte- und der Viskosität des Gasgemischs mittels eines vibronischen Sensors. Zu diesem Zweck besteht Bedarf an einem zuverlässig messenden, und kostengünstig zu fertigenden Gasanalysator. Es ist die Aufgabe der vorliegenden Erfindung, einen solchen und eine Gasanalysevorrichtung mit einem solchen bereitzustellen.

Die Aufgabe wird erfindungsgemäß gelöst durch den Gasanalystator gemäß dem unabhängigen Patentanspruch 1 und durch die Gasanalysevorrichtung gemäß dem unabhängigen Anspruch 8.

Der erfindungsgemäße Gasanalysator zum Messen der Dichte und / oder der Viskosität eines Mediums, insbesondere eines Gasgemischs, umfasst:
eine Anschlussplatte die eine erste Medienöffnung und eine zweite Medienöffnung aufweist, die sich jeweils von einer ersten Oberfläche zu einer zweiten Oberfläche der Anschlussplatte erstrecken;
eine Sensorplatte, die mit der Anschlussplatte in einer ersten Fügeebene gefügt ist; und
eine Deckplatte, die auf einer der Anschlussplatte abgewandten Seite der Sensorplatte mit der Sensorplatte in einer zweiten Fügeebene gefügt ist, wobei die Deckplatte eine Deckplattenkavität aufweist, die mit der ersten und zweiten Medienöffnung kommuniziert;
wobei die Sensorplatte mindestens eine Oszillatorkavität aufweist, die mit der Medienöffnung und der zweiten Medienöffnung kommuniziert, wobei die Sensorplatte einen mikromechanischen Oszillator aufweist, der in der Oszillatorkavität angeordnet ist und zu mechanischen Schwingungen senkrecht zu den Fügebenen anregbar ist,
wobei die Oszillatorkavität einen ersten Durchbruch durch die Sensorplatte umfasst,
wobei der Gasanalysator weiterhin einen ersten Fluidkanal umfasst, der sich von der ersten Medienöffnung zur Oszillatorkavität erstreckt und zwischen der Anschlussplatte und der Sensorplatte gebildet ist, und einen zweiten Fluidkanal, der sich von der zweiten Medienöffnung zur Oszillatorkavität erstreckt und zwischen der Anschlussplatte und der Sensorplatte gebildet ist,
wobei die Sensorplatte einen ersten Medienöffnungsdurchbruch aufweist, welcher sich von der ersten Medienöffnung zur Deckplattenkavität erstreckt, und einen zweiten Medienöffnungsdurchbruch, welcher sich von der zweiten Medienöffnung zur Deckplattenkavität erstreckt,
wobei die Deckplattenkavität sowohl die Oszillatorkavität als auch den ersten Medienöffnungsdurchbruch und den zweiten Medienöffnungsdurchbruch überdeckt,
wobei der erste Fluidkanal eine Vertiefung aufweist, die in der Oberfläche der Sensorplatte gebildet ist, wobei der erste Fluidkanal in den ersten Medienöffnungsdurchbruch mündet, und/oder der zweite Fluidkanal weist eine Vertiefung auf, die in der Oberfläche der Sensorplatte gebildet ist wobei der zweite Fluidkanal in den zweiten Medienöffnungsdurchbruch mündet,
wobei der erste Medienöffnungsdurchbruch an einer der Deckplatte zugewandten Oberseite der Sensorplatte einen ersten Flächenschwerpunkt aufweist,
wobei der zweite Medienöffnungsdurchbruch an der Oberseite der Sensorplatte einen zweiten Flächenschwerpunkt aufweist, wobei der erste Flächenschwerpunkt von dem zweiten Flächenschwerpunkt einen Flächenschwerpunktsabstand aufweist,
wobei die Oszillatoröffnung an der Oberseite der Sensorplatte einen dritten Flächenschwerpunkt aufweist, wobei der dritte Flächenschwerpunkt einen Abstand zu einer Verbindungslinie zwischen dem ersten und dem zweiten Flächenschwerpunkt aufweist, der mindestens die Hälfte, insbesondere mindestens das Einfache und bevorzugt das Doppelte des geometrischen Mittels aus dem Flächenschwerpunktabstand und dem entlang der Verbindungslinie gemittelten Abstand der Deckplatte von der Oberseite der Sensorlage aufweist.

In einer Weiterbildung der Erfindung sind die Medienöffnungsdurchbrüche, die Oszillatoröffnung, und die Deckplattenkavität und ggf. vorhandene Fluidkanäle so positioniert und aufeinander abgestimmt sind, dass die mittlere Strömungsgeschwindigkeit eines Gases in der Oszillatoröffnung nicht mehr als ein Viertel, insbesondere nicht mehr als ein Achtel und bevozugt nicht mehr als ein Sechzehntel der mittleren Strömungsgeschwindigkeit in den Medienöffnungsdurchbrüchen beträgt.

In einer Weiterbildung der Erfindung umfasst die Sensorplatte Silizium, und ist insbesondere durch Strukturieren eines SOI-Wafers präpariert. In einer Ausgestaltung dieser Weiterbildung der Erfindung umfasst der Oszillator amorphes Silizium, welches auf einer Isolatorschicht des SOI Wafers abgeschieden ist.

In einer Weiterbildung der Erfindung weist der Oszillator einen resistiven Wandler mit mindestens einem Widerstandselement mit einem verformungsabhängigen Widerstandswert auf, insbesondere eine Brückenschaltung mit vier Widerstandselementen.

In einer Weiterbildung der Erfindung weist der Oszillator mindestens eine Leiterschleife aufweist, um ein erstes Magnetfeld zu erzeugen, wobei der Gasanalysator weiterhin eine Feldquelle für ein zweites Magnetfeld aufweist, wobei das erste Magnetfeld und das zweite Magnetfeld jeweils zumindest eine Komponente aufweisen, die parallel zur Oberflächennormalen der Sensorplatte verläuft.

Die erfindungsgemäße Gasanalyseanordnung umfasst den erfindungsgemäßen Gasanalysator, einen Temperatursensor und/oder einen Drucksensor und/oder einen Wärmeleitfähigkeitssensor.

In einer Weiterbildung der Erfindung umfasst die Gasanalyseanordnung weiterhin eine Betriebs- und Auswerteschaltung zum Anregen des Oszillators des Gasanalysators, und zum Erfassen der Schwingungen des Oszillators, sowie ggf. zum Treiben weiterer Sensoren des Gasanalysators und zum Erfassen von deren Signalen.

In einer Weiterbildung der Erfindung umfasst die Deckplatte Si.

In einer Weiterbildung der Erfindung umfasst die Anschlussplatte Glas, insbesondere ein Borosilikatglas.

Die Erfindung wird nun anhand des in den Zeichnungen dargestellten Ausführungsbeispiels näher erläutert. Es zeigt:
Fig. 1a: eine Explosionszeichnung des Ausführungsbeispiels eines erfindungsgemäßen Gasanalysators;
Fig. 1b: eine Explosionszeichnung des Ausführungsbeispiels aus Fig. 1a mit transparent dargestellten Komponenten;
Fig. 2: eine schematische Aufsicht auf den vibronischen Sensor des Ausführungsbeispiels aus Fign 1a und 1b;
Fig. 3: einen Detaillängsschnitt durch den erfindungsgemäßen Gasanalysator; und
Fig. 4: eine schematische Darstellung einer erfindungsgemäßen Gasanalyseanordnung.

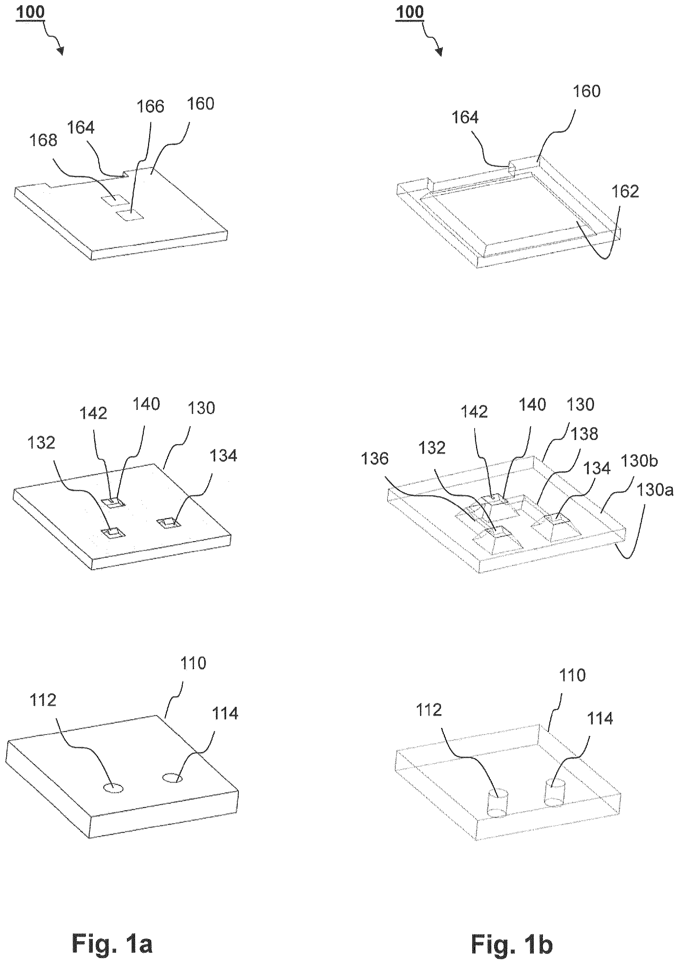

Das in Fign. 1a und 1b gezeigte Ausführungsbeispiels eines erfindungsgemäßen Gasanalysators 100 umfasst eine Anschlussplatte 110 aus einem Borosilikatglas, beispielsweise Borofloat in einer Materiastärke von einigen hundert Mikrometern. Die Anschlussplatte 110 weist einer erste Medienöffnung 112 und eine zweite Medienöffnung 114 auf, die sich jeweils von einer ersten Oberfläche zu einer zweiten Oberfläche der Anschlussplatte 110 erstrecken. Durch die beiden Medienöffnungen 112, 114 wird dem Gasanalysator im Einsatz ein zu analysierendes Gas zu bzw. abgeführt.

Der Gasanalysator 100 umfasst weiterhin eine Sensorplatte 130, die mit der Anschlussplatte 110 in einer ersten Fügeebene gefügt ist, beispielsweise durch anodisches Bonden. Die Sensorplatte 130 umfasst einen ersten Medienöffnungsdurchbruch 132, der mit der ersten Medienöffnung 112 fluchtet, und einen zweiten Medienöffnungsdurchbruch 134, der mit der zweiten Medienöffnung 114 fluchtet. Die Sensorplatte 110 umfasst weiterhin eine Oszillatorkavität 140 in welcher ein vibronischer Sensor 142 in Form eines Cantileverschwingers, der an einer dem Anschlussplatte abgewandten Oberseite 130b der Sensorplatte 130 präpariert ist. Die Sensorplatte 130 ist vorzugsweise aus einem SOI-Wafer gebildet wobei der Cantileverschwinger im so genannten Device-Layer präpariert ist.

Weiterhin umfasst der Gasanalysator 100 eine Deckplatte 160, die auf einer der Anschlussplatte 110 abgewandten Seite der Sensorplatte 130 mit der Sensorplatte in einer zweiten Fügeebene gefügt ist, beispielsweise mit einem Glaslot. In der Deckplatte 160 ist eine der Sensorplatte 130 zugewandte Deckplattenkavität 162 präpariert, die sich über die beiden Medienöffnungsdurchbrüche 132, 134 und die Oszillatorkavität 140 erstreckt. Damit kommunizieren die Medienöffnungen 112, 114 über die Deckplattenkavität 162 miteinander und mit der Oszillatorkavität 140, so dass der vibronische Sensor 142 über einen durch die Deckplattenkavität 162 verlaufenden, ersten Gaspfad mit einem durch die Medienöffnungen 112, 114 zu- bzw. abgeführten Gas beaufschlagbar ist. Um einen zuverlässigen Gasaustausch am Ort des vibronischen Sensors 142 zu gewährleisten, weist der Gasanalysator weiterhin einen ersten Fluidkanal 136 und einen zweiten Fluidkanal 138 auf, die sich jeweils vom ersten bzw. zweiten Medienöffnungsdurchbruch 132, 134 zur Oszillatorkavität erstrecken, und durch anisotropes Ätzen von Gräben in der Sensorplatte 130 von der Unterseite 130a her präpariert sind. Die Fluidkanäle 136, 138 bilden einen zweiten Gaspfad über den der vibronische Sensor 142 von der Unterseite der Sensorplatte 130 her mit dem in den Gasanalysator eingeleiteten Gas beaufschlagbar ist. Damit ist ein hinreichend schneller Gasaustausch in der Oszillatorkavität 140 gewährleistet. Andererseits weisen die Fluidkanäle 136, 138 einen erheblich größeren Stromungswiderstand auf als ein Gaspfad zwischen den Medienöffnungsdurchbrüchen, der durch die Deckplattenkavität 162 verläuft. Daher strömt der überwiegende Teil des Gases vom ersten Medienöffnungsdurchbruch 132 zum zweiten Medienöffnungsdurchbruch 134 durch die Deckplattenkavität 162. Die Strömungsgeschwindigkeit des Gases in der Oszillatorkavität 140 bleibt daher begrenzt. So dass der Oszillator in seinem Schwingungsverhalten allenfalls vernachlässigbar durch Strömungen beeinflusst wird.

Die Deckplatte 160 weist eine Drucksensorfläche 166 auf, d.h. hier kann beispielsweise entweder eine piezoresistive Drucksensormembran im Material der Deckplatte präpariert sein, oder die Deckplatte umfasst eine Öffnung, über der ein Drucksensor, der auf der Deckplatte montiert mit einem in dem Gasanalysator herrschenden Druck beaufschlagbar ist.

Die Deckplatte 160 umfasst an ihrer Oberseite weiterhin eine Magnetfläche 168, auf der ein Magnet zu montieren oder zu präparieren ist. Die Magnetfläche fluchtet mit der Oszillatorkavität 140, so dass der vibronische Sensor mittels eines magnetischen Wechselfeldes zum Schwingen angeregt werden kann.

Die Deckplatte 160 weist schließlich in einem seitlichen Randbereich eine Aussparung 164 auf, um Kontaktflächen an der Oberseite der Sensorplatte 130 zugänglich zu machen.

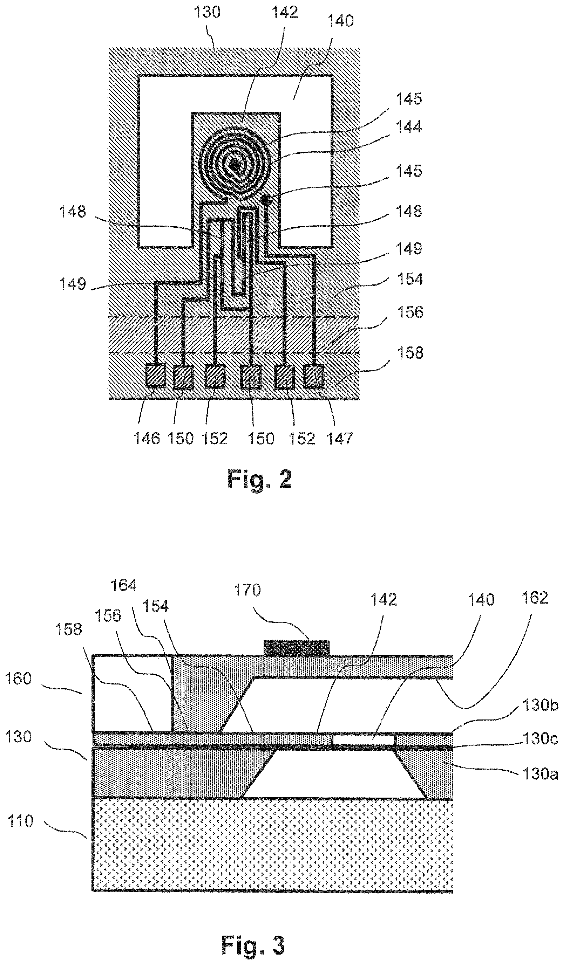

Anhand von Fign. 2 und 3 werden im Folgenden Einzelheiten des vibronischen Sensors 142 erläutert, der im Device-Layer an der Oberseite 130b der Sensorplatte 130 präpariert ist, wobei die Sensorplatte 130 aus einem SOI-Wafer gebildet ist. Die Oszillatorkavität 140 ist präpariert durch anisotropes Ätzen einer Kavität von der Unterseite 130a der Sensorplatte 130 bis zur Oxidschicht 130c und durch anschließendes Entfernen der Oxidschicht und des Device-Layers im Bereich der Kavität außer in einem maskierten Bereich, der den Cantilever des vibronischen Sensors 142 bildet.

Zum Antrieb des vibronischen Sensors 142 ist auf dem Cantilever eine Leiterschleife oder Planarspule 144 präpariert. Sofern nur eine einfache Leiterschleife gebildet ist, kann die Kontaktierung vollständig an der Oberseite 130 b der Sensorplatte erfolgen. Bei der hier gezeigten spilralförmigen Planarspule 144 mit mehreren Windungen sind Durchkontaktierungen zur Rückseite des Cantilevers gebildet um ein inneres Ende der Planarspule 144 kontaktieren zu können. Die Planarspule ist über Spulenkontaktflächen 146, 147 mit einem Wechselstrom beaufschlagbar ist. Das resultierende Magnetfeld führt in Wechselwirkung mit dem statischen Magnetfeld eines Permanentmagneten 170, der auf der Deckplatte 160 angeordnet ist, zu einer oszillierenden Kraft, die den Cantilever frequenzabhängig zum Schwingen anregt. Die Eigenfrequenz des Cantilevers hängt von der Dichte eines den Cantilever umgebenden Gasgemischs ab, während die Schwingungsdämpfung des Cantilevers von der Viskosität des Gasgemischs abhängt.

Der vibronische Sensor 142 umfasst zum Erfassen der Schwingungen des Cantilevers weiterhin vier piezoresistive Widerstandselemente, die in einer WheatstoneBrücke angeordnet sind, wobei zwei Widerstandselemente erster Art 148 zumindest teilweise auf dem Cantilever und zwei Widerstandselemente zweiter Art 149 im einem die Oszillatorkavität 140 umgebenden Randbereich des Device-Layers angeordnet sind. Die Wheatstonebrücke wird über Kontaktflächen erster Art 150 mit einem konstanten Längsstrom zu speisen, wobei die zugehörige Längsspannung eine Funktion der Temperatur des vibronischen Sensors ist. Entsprechend ist eine zugehörige Diagonalspannung der Wheatstone-Brücke, die an Kontaktflächen zweiter Art 152 anliegt, ein Maß für die Auslenkung des schwingenden Cantilevers.

Die zuvor genannten 146, 147, 150, 152 sind in einem Randbereich 158 an der Oberseite der Sensorplatte 130 angeordnet, der nicht von der Deckplatte 160 überdeckt ist, da die Deckplatte 160 hier eine Aussparung 164 aufweist. Die Deckplatte 160 ist, wie bereits oben erwähnt, entlang einer umlaufenden Fügestelle 156, die ein Glaslot aufweist mit der Sensorplatte 130 verbunden, wobei die Fügestelle 156 im Bereich der Aussparung 164 den Randbereich 158 der Sensorplatte mit den Kontaktflächen von einem inneren Bereich der Sensorplatte 154 trennt, in dem der vibronische Sensor 142 angeordnet ist. Die Kontaktflächen sind durch metallische Leiterbahnen mit der Planarspule 144 bzw. der Wheatstone-Brücke verbunden, wobei die Leiterbahnen im Bereich der Fügestelle 156 von dem Glaslot überdeckt sind.

In der Präparation der Kavitäten wurden im Ausführungsbeispiel anisotrope Ätzverfahren eingesetzt. Selbstverständlich sind zur Realisierung der Erfindung auch sämtliche andere Ätzverfahren der Halbleiterprozesstechnik verwendbar.

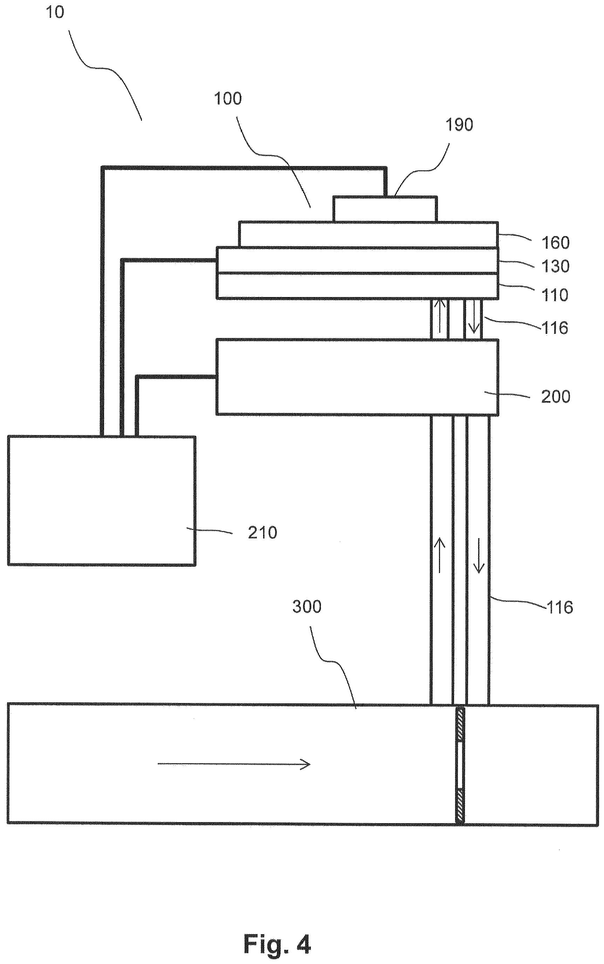

Die in Fig. 4 dargestellte Gasanalyseanordnung umfasst neben dem zuvor beschriebenen Gasanalysator 100 einen piezoresistiven Absolutdrucksensor 190, der auf der Deckplatte 160 des Gasanalysators angeordnet ist, und einen Wärmeleitfähigkeitssensor 200 der parallel zum zum Gasanalysator 100 an Wirkdruckleitungen 116 angeschlossen ist, welche ihrerseits durch einen Druckgradienten über einer Blende in einer Rohrleitung 300 mit einem Strom eines zu analysierenden Gasgemischs gespeist werden. Ein geeigneter Wärmeleitfähigkeitssensor, wird beispielsweise von der Firma POSiFA Microsystems angeboten. Die Gasanalyseanordnung 10 umfasst weiterhin eine Betriebs- und Auswerteschaltung 210 zum Anregen des Oszillators des Gasanalysators, zum Erfassen der Schwingungen des Oszillators, sowie ggf. zum Treiben weiterer Sensoren des Gasanalyseanordnung und zum Erfassen von deren Signalen.

## Patentansprüche

1. Gasanalysator (100) zum Messen der Dichte und / oder der Viskosität eines Mediums, insbesondere eines Gasgemischs, umfassend:
eine Anschlussplatte (110) die eine erste Medienöffnung (112) und eine zweite Medienöffnung (114) aufweist, die sich jeweils von einer ersten Oberfläche zu einer zweiten Oberfläche der Anschlussplatte (110) erstrecken;
eine Sensorplatte (130), die mit der Anschlussplatte (110) in einer ersten Fügeebene gefügt ist; und
eine Deckplatte (160), die auf einer der Anschlussplatte (110) abgewandten Seite der Sensorplatte (130) mit der Sensorplatte in einer zweiten Fügeebene gefügt ist, wobei die Deckplatte (160) eine Deckelkavität (162) aufweist, die mit der ersten und zweiten Medienöffnung (112, 114) kommuniziert;
wobei die Sensorplatte (130) mindestens eine Oszillatorkavität (140) aufweist, die mit der ersten Medienöffnung (112) und der zweiten Medienöffnung (114) kommuniziert, wobei die Sensorplatte (130) einen mikromechanischen Oszillator (142) aufweist, der in der Oszillatorkavität (140) angeordnet ist und zu mechanischen Schwingungen senkrecht zu den Fügebenen anregbar ist,
**dadurch gekennzeichnet, dass**
die Oszillatorkavität (140) einen ersten Durchbruch durch die Sensorplatte (130) umfasst,
wobei der Gasanalysator einen ersten Fluidkanal (136) aufweist, der sich von der ersten Medienöffnung (132) zur Oszillatorkavität (140) erstreckt und zwischen der Anschlussplatte (110) und der Sensorplatte (130) gebildet ist,
wobei der Gasanalysator einen zweiten Fluidkanal (138) aufweist, der sich von der zweiten Medienöffnung (114) zur Oszillatorkavität (140) erstreckt und zwischen der Anschlussplatte (110) und der Sensorplatte (130) gebildet ist,
wobei die Sensorplatte (130) einen ersten Medienöffnungsdurchbruch (132) aufweist, welcher sich von der ersten Medienöffnung (112) zur Deckplattenkavität (162) erstreckt,
wobei die Sensorplatte (130) einen zweiten Medienöffnungsdurchbruch (134) aufweist, welcher sich von der zweiten Medienöffnung (114) zur Deckplattenkavität (162) erstreckt,
wobei die Deckplattenkavität (162) sowohl die Oszillatorkavität (140) als auch den ersten Medienöffnungsdurchbruch (132) und den zweiten Medienöffnungsdurchbruch überdeckt,
wobei der erste Fluidkanal (136) eine Vertiefung aufweist, die in der Oberfläche der Sensorplatte (130) gebildet ist, wobei der erste Fluidkanal (136) in den ersten Medienöffnungsdurchbruch (132) mündet,
wobei der zweite Fluidkanal (138) eine Vertiefung aufweist, die in der Oberfläche der Sensorplatte (130) gebildet ist wobei der zweite Fluidkanal (138) in den zweiten Medienöffnungsdurchbruch (134) mündet und
wobei der erste Medienöffnungsdurchbruch (132) an einer der Deckplatte (160) zugewandten Oberseite (130b) der Sensorplatte (130) einen ersten Flächenschwerpunkt aufweist, wobei der zweite Medienöffnungsdurchbruch (134) an der Oberseite (130b) der Sensorplatte (130) einen zweiten Flächenschwerpunkt aufweist, wobei der erste Flächenschwerpunkt von dem zweiten Flächenschwerpunkt einen Flächenschwerpunktsabstand aufweist, wobei die Oszillatoröffnung (140) an der Oberseite (130b) der Sensorplatte (130) einen dritten Flächenschwerpunkt aufweist, wobei der dritte Flächenschwerpunkt einen Abstand zu einer Verbindungslinie zwischen dem ersten und dem zweiten Flächenschwerpunkt aufweist, der mindestens die Hälfte, insbesondere mindestens das Einfache und bevorzugt das Doppelte des geometrischen Mittels aus dem Flächenschwerpunktabstand und dem entlang der Verbindungslinie gemittelten Abstand der Deckplatte (160) von der Oberseite (130b) der Sensorlage (130) aufweist.

2. Gasanalysator (100) nach Anspruch 1, wobei die Medienöffnungsdurchbrüche (132, 134), die Oszillatoröffnung (140), und die Deckplattenkavität (162) und ggf. vorhandene Fluidkanäle (136, 138) so positioniert und aufeinander abgestimmt sind, dass die mittlere Strömungsgeschwindigkeit eines Gases in der Oszillatoröffnung (140) nicht mehr als ein Viertel, insbesondere nicht mehr als ein Achtel und bevozugt nicht mehr als ein Sechzehntel der mittleren Strömungsgeschwindigkeit in den Medienöffnungsdurchbrüchen (132, 134) beträgt.

3. Gasanalysator (100) nach einem der vorhergehenden Ansprüche, wobei die Sensorplatte (130) Si, umfasst und insbesondere durch Strukturieren eines SOI-Wafers präpariert ist.

4. Gasanalysator (100) nach Anspruch 3, wobei der Oszillator (142) amorphes Silizium umfasst, welches auf einer Isolatorschicht des SOI Wafers abgeschieden ist.

5. Gasanalysator (100) nach einem der vorhergehenden Ansprüche, wobei der Oszillator (142) einen resistiven Wandler mit mindestens einem Widerstandselement (148, 149) mit einem verformungsabhängigen Widerstandswert aufweist, insbesondere mit eine Brückenschaltung mit vier Widerstandselementen (148, 149).

6. Gasanalysator (100) nach einem der vorhergehenden Ansprüche, wobei der Oszillator mindestens eine Leiterschleife (144) aufweist, um ein erstes Magnetfeld zu erzeugen, wobei der Gasanalysator weiterhin eine Feldquelle (170) für ein zweites Magnetfeld aufweist, wobei das erste Magnetfeld und das zweite Magnetfeld jeweils zumindest eine Komponente aufweisen, die parallel zur Oberflächennormalen der Sensorplatte verläuft.

7. Gasanalysator (100) nach einem der vorhergehenden Ansprüche, wobei die Deckplatte (160) Si, umfasst, und wobei die Anschlussplatte (110) bevorzugt Glas umfasst, insbesondere ein Borosilikatglas.

8. Gasanalyseanordnung (10), umfassend einen Gasanalysator (100) nach einem der vorhergehenden Ansprüche, einen Temperatursensor und/oder einen Drucksensor (190) und/oder einen Wärmeleitfähigkeitssensor (200).

9. Gasanalyseanordnung (10) nach Anspruch 8, weiterhin umfassend eine Betriebs- und Auswerteschaltung (210) zum Anregen des Oszillators (142), und zum Erfassen der Schwingungen des Oszillators (142) des Gasanalysators (100), sowie ggf. zum Treiben weiterer Sensoren (190, 200) der Gasanalyseanordnung und zum Erfassen von deren Signalen.

## Claims

1. Gas analyzer (100) designed to measure the density and/or the viscosity of a medium, particularly a gas mixture, comprising:
a connection plate (110), which has a first medium opening (112) and a second medium opening (114), wherein said openings each extend from a first surface to a second surface of the connection plate (110);
a sensor plate (130), which is joined to the connection plate (110) in a first joint plane; and
a cover plate (160) which is joined to the sensor plate in a second joint plane on a side of the sensor plate (130) facing away from the connection plate (110), wherein the cover plate (160) has a cover cavity (162) which communicates with the first and the second medium opening (112, 114);
wherein the sensor plate (130) has at least an oscillator cavity (140), which communicates with the first medium opening (112) and the second medium opening (114), wherein the sensor plate (130) has a micromechanical oscillator (142) which is arranged in the oscillator cavity (140) and can be excited to produce mechanical vibrations perpendicular to the joint levels,
**characterized in that**
the oscillator cavity (140) comprises a first passage through the sensor plate (130),
wherein the gas analyzer comprises a first fluid channel (136) which extends from the first medium opening (132) to the oscillator cavity (140) and is formed between the connection plate (110) and the sensor plate (130),
wherein the analyzer comprises a second fluid channel (138) which extends from the second medium opening (114) to the oscillator cavity (140) and is formed between the connection plate (110) and the sensor plate (130),
wherein the sensor plate (130) has a first medium opening passage (132) which extends from the first medium opening (112) to the cover plate cavity (162),
wherein the sensor plate (130) has a second medium opening passage (134) which extends from the second medium opening (114) to the cover plate cavity (162),
wherein the cover plate cavity (162) covers over both the oscillator cavity (140) and the first medium opening passage (132) as well as the second medium opening passage,
wherein the first fluid channel (136) has a recess formed in the surface of the sensor plate (130), wherein the first fluid channel (136) enters into the first medium opening passage (132),
wherein the second fluid channel (138) has a recess formed in the surface of the sensor plate (130), wherein the second fluid channel (138) enters into the second medium opening passage (134) and
wherein the first medium opening passage (132) has a first centroid point on a top side (130b) of the sensor plate (130) facing towards the cover plate (160), wherein the second medium opening passage (134) has a second centroid point on the top side (130b) of the sensor plate (130), wherein the first centroid point has a centroid distance point in relation to the second centroid point, wherein the oscillator opening (140) has a third centroid point on the top side (130b) of the sensor plate (130), wherein the third centroid point has a distance in relation to a connecting line between the first and the second centroid point, wherein said distance is at least half, particularly at least once and preferably double the geometric average of the distance between the centroid point and the distance of the cover plate (160), averaged along the connecting line, in relation to the top side (130b) of the sensor plate (130).

2. Gas analyzer (100) as claimed in Claim 1,
wherein the medium opening passages (132, 134), the oscillator opening (140) and the cover plate cavity (162) and any fluid channels present (136, 138) are positioned and adapted to one another in such a way that the average flow velocity of a gas in the oscillator opening (140) is not more than a quarter, particularly not more than an eighth and, preferably, not more than a sixteenth of the average flow velocity in the medium opening passages (132, 134).

3. Gas analyzer (100) as claimed in one of the previous claims, wherein the sensor plate (130) comprises Si, and is particularly prepared by structuring an SOI wafer.

4. Gas analyzer (100) as claimed in Claim 3, wherein the oscillator (142) comprises amorphous silicon, which is deposited on an isolator layer of the SOI wafer.

5. Gas analyzer (100) as claimed in one of the previous claims, wherein the oscillator (142) comprises a resistive transducer with at least a resistance element (148, 149) with a deformation-dependent resistance value, particularly with a bridge circuit with four resistance elements (148, 149).

6. Gas analyzer (100) as claimed in one of the previous claims, wherein the oscillator comprises at least a conductor loop (144) designed to generate a first magnetic field, wherein the gas analyzer further has a field source (170) for a second magnetic field, wherein the first magnetic field and the second magnetic field each has at least one component which is parallel to the surface normal of the sensor plate.

7. Gas analyzer (100) as claimed in one of the previous claims, wherein the cover plate (160) comprises Si, and wherein the connection plate (110) preferably comprises glass, particularly borosilicate glass.

8. Gas analysis arrangement (10) comprising a gas analyzer (100) as claimed in one of the previous claims, a temperature sensor and/or a pressure sensor (190) and/or a thermal conductivity sensor (200).

9. Gas analysis arrangement (10) as claimed in Claim 8, further comprising an operating and evaluation circuit (210), which is designed to excite the oscillator (142), and to capture the oscillations of the oscillator (142) of the gas analyzer (100), and, where applicable, to drive other sensors (190, 200) of the gas analysis arrangement and to capture their signals.

## Revendications

1. Analyseur de gaz (100) destiné à la mesure de la densité et/ou de la viscosité d'un produit, notamment d'un mélange de gaz, lequel analyseur comprend :
une plaque de raccordement (110), laquelle présente une première ouverture de produit (112) et une deuxième ouverture de produit (114), lesquelles ouvertures s'étendent chacune d'une première surface à une deuxième surface de la plaque de raccordement (110) ;
une plaque de détection (130), laquelle est assemblée à la plaque de raccordement (110) dans un premier plan d'assemblage ; et
une plaque de recouvrement (160) qui, sur un côté de la plaque de détection (130) opposé à la plaque de raccordement (110), est assemblée avec la plaque de détection dans un deuxième plan d'assemblage, la plaque de recouvrement (160) présentant une cavité de couvercle (162), laquelle cavité communique avec la première et la deuxième ouverture de produit (112, 114) ;
la plaque de détection (130) comprenant au moins une cavité d'oscillateur (140), laquelle cavité communique avec la première ouverture de produit (112) et la deuxième ouverture de produit (114), la plaque de détection (130) comprenant un oscillateur micromécanique (142), lequel est disposé dans la cavité d'oscillateur (140) et peut être excité pour produire des vibrations mécaniques perpendiculaires aux niveaux d'assemblage,
**caractérisé en ce que**
la cavité d'oscillateur (140) comprend un premier passage à travers la plaque de détection (130),
l'analyseur de gaz comprenant un premier canal de fluide (136) s'étendant de la première ouverture de produit (132) à la cavité d'oscillateur (140) et formé entre la plaque de raccordement (110) et la plaque de détection (130),
l'analyseur de gaz comprenant un deuxième canal de fluide (138) s'étendant de la deuxième ouverture de produit (114) à la cavité d'oscillateur (140) et formé entre la plaque de raccordement (110) et la plaque de détection (130),
la plaque de détection (130) présentant un premier passage d'ouverture de produit (132) s'étendant de la première ouverture de produit (112) à la cavité de plaque de recouvrement (162),
la plaque de détection (130) présentant un deuxième passage d'ouverture de produit (134) s'étendant de la deuxième ouverture de produit (114) à la cavité de plaque de recouvrement (162),
la cavité de plaque de recouvrement (162) recouvrant à la fois la cavité d'oscillateur (140) et le premier passage d'ouverture de produit (132) ainsi que le deuxième passage d'ouverture de produit,
le premier canal de fluide (136) présentant une cavité formée dans la surface de la plaque de détection (130), le premier canal de fluide (136) débouchant dans le premier passage d'ouverture de produit (132),
le deuxième canal de fluide (138) présentant une cavité formée dans la surface de la plaque de détection (130), le deuxième canal de fluide (138) débouchant dans le deuxième passage d'ouverture de produit (134) et
le premier passage d'ouverture de produit (132) présentant un premier centre de gravité de surface sur une face supérieure (130b) de la plaque de détection (130) orientée vers la plaque de recouvrement (160), le deuxième passage d'ouverture de produit (134) présentant un deuxième centre de gravité de surface sur la face supérieure (130b) de la plaque de détection (130), le premier centre de gravité de surface présentant une distance de centre de gravité de surface par rapport au deuxième centre de gravité de surface, l'ouverture d'oscillateur (140) sur la face supérieure (130b) de la plaque de détection (130) présentant un troisième centre de gravité de surface, le troisième centre de gravité de surface présentant une distance par rapport à une ligne de liaison entre le premier et le deuxième centre de gravité de surface, laquelle distance présente au moins la moitié, notamment au moins le simple et de préférence le double de la moyenne géométrique de la distance entre le centre de gravité de surface et la distance de la plaque de recouvrement (160), moyennée le long de la ligne de liaison, par rapport à la face supérieure (130b) de la plaque de détection (130).

2. Analyseur de gaz (100) selon la revendication 1,
pour lequel les passages d'ouverture de produit (132, 134), l'ouverture d'oscillateur (140) et la cavité de plaque de recouvrement (162), ainsi que les canaux de fluide (136, 138) éventuellement présents, sont positionnés et adaptés les uns aux autres de telle sorte que la vitesse d'écoulement moyenne d'un gaz dans l'ouverture d'oscillateur (140) n'est pas supérieure à un quart, notamment pas supérieure à un huitième et, de préférence, pas supérieure à un seizième de la vitesse d'écoulement moyenne dans les passages d'ouverture de produit (132, 134).

3. Analyseur de gaz (100) selon l'une des revendications précédentes, pour lequel la plaque de détection (130) comprend du Si, et est notamment préparée par structuration d'une plaquette SOI.

4. Analyseur de gaz (100) selon la revendication 3, pour lequel l'oscillateur (142) comprend du silicium amorphe, lequel silicium est déposé sur une couche isolante de la plaquette SOI.

5. Analyseur de gaz (100) selon l'une des revendications précédentes, pour lequel l'oscillateur (142) comprend un transducteur résistif comportant au moins un élément résistif (148, 149) avec une valeur de résistance dépendant de la déformation, notamment un montage en pont comportant quatre éléments résistifs (148, 149).

6. Analyseur de gaz (100) selon l'une des revendications précédentes, pour lequel l'oscillateur comprend au moins une spire de courant (144) destinée à générer un premier champ magnétique, l'analyseur de gaz comprenant en outre une source de champ (170) pour un deuxième champ magnétique, le premier champ magnétique et le deuxième champ magnétique présentant chacun au moins une composante qui est parallèle à la normale à la surface de la plaque de détection.

7. Analyseur de gaz (100) selon l'une des revendications précédentes, pour lequel la plaque de couverture (160) comprend du Si, et pour lequel la plaque de raccordement (110) comprend de préférence du verre, notamment un verre borosilicaté.

8. Dispositif d'analyse de gaz (10) comprenant un analyseur de gaz (100) selon l'une quelconque des revendications précédentes, un capteur de température et/ou un capteur de pression (190) et/ou un capteur de conductivité thermique (200).

9. Dispositif d'analyse de gaz (10) selon la revendication 8, comprenant en outre un circuit d'exploitation et d'évaluation (210), lequel est conçu pour exciter l'oscillateur (142), et pour mesurer les oscillations de l'oscillateur (142) de l'analyseur de gaz (100), ainsi que, le cas échéant, pour commander d'autres capteurs (190, 200) du dispositif d'analyse de gaz et pour mesurer les signaux desdits capteurs.
